# FASCICULE DE BREVET EUROPEEN

(11) **EP 0 943 949 B1**
(45) Date de publication et mention de la délivrance du brevet: **13.10.2004**
(21) Numéro de dépôt: 99400618.7
(22) Date de dépôt: 12.03.1999
(51) Int. Cl.: G02B 7/34, G02B 7/28

(54) **Système de détermination et de quantification de l'alignement d'un objet avec optique de couplage et dispositif de prise de vues**
System für die Ermittlung und Quantifizierung einer Ausrichtung von einem Objekt mit einer Kopplungsoptik und eine Bildaufnahmevorrichtung
System for the determination and the quantification of the alignment of an object with a coupling optics and an image sensing device

(30) Priorité: 16.03.1998 FR 9803184
(43) Date de publication de la demande: 22.09.1999
(73) Titulaire: COMMISSARIAT A L'ENERGIE ATOMIQUE, 75015 Paris (FR)
(72) Inventeur: Guillemaud, Régis, 38000 Grenoble (FR)
(74) Mandataire: Poulin, Gérard

(56) Documents cités:
- US-A- 4 201 456
- US-A- 4 500 189
- US-A- 4 575 626

## Description

### Domaine de l'invention

L'invention concerne un système pour déterminer si un objet dont on cherche à réaliser une image est aligné avec une optique de couplage et un dispositif d'acquisition d'images et, en cas de non-alignement, pour quantifier le réglage de positionnement à effectuer sur les éléments du système pour obtenir cet alignement.

L'invention trouve des applications dans tous les domaines relatifs à la création d'images de qualité optimum d'un objet sur un plan-image, au travers d'une optique et, en particulier, au domaine médical.

### Etat de la technique

Dans le domaine de l'acquisition d'images, l'homme de l'art cherche à obtenir des images de la meilleure qualité possible, c'est-à-dire avec une bonne focalisation du système d'acquisition et une résolution d'image la meilleure possible.

Pour obtenir une image d'excellente qualité, le plan-image (c'est-à-dire le plan dans lequel se trouve le dispositif d'acquisition d'images) doit être parfaitement aligné, d'une part, avec l'optique de couplage et, d'autre part, avec l'objet. Or, cet alignement est difficile à réaliser car il faut régler l'orthogonalité du plan-image avec l'axe optique, ainsi que la distance focale.

Par example, la demande de brevet US 4 201 456 A décrit un indicateur de condition de focalisation d'un système optique ayant un procédé de vérouillage et un mouvement alternant à levier formant deux images qui fusionnent quand le système est focalisé.

Aussi, pour créer des images d'un objet sur un plan-image au travers d'une optique, il est donc nécessaire d'obtenir le positionnement optimum entre l'objet, l'optique et le plan-image. Ce positionnement optimum peut s'obtenir au moyen de réglages qui se font, classiquement, entre les positions de l'optique et du système d'acquisition (c'est-à-dire du plan-image), l'objet étant généralement positionné de manière fixe. Ces réglages sont de deux types :
- un réglage, à l'aide de rotations, de la perpendicularité du plan-image par rapport à l'axe optique de l'optique ; et
- un réglage de la position du plan-image (c'est-à-dire du système d'acquisition) par rapport à l'optique, ce qui correspond au réglage de mise au point classique sur un appareil photographique. Ce réglage se fait par une translation, suivant l'axe de l'optique, et permet de focaliser le plan-image (c'est-à-dire le plan du dispositif de prise d'images, ou système d'acquisition) sur le plan-objet, c'est-à-dire le plan dans lequel se situe l'objet à mettre en image.

Classiquement, l'objet peut être à une distance variable de l'optique ; le réglage optique/plan-image peut donc se faire soit de façon approximative, soit visuellement par l'opérateur, grâce à des moyens de visée télémétrique ou reflex.

Certains dispositifs de prise d'images sont même munis d'un système de mesure de distance objet/optique qui détermine la distance entre l'objet et l'optique par une méthode ultrasonore ou infrarouge ; dans ce cas, le réglage optique/plan-image est réalisé automatiquement.

Cependant, dans ces dispositifs classiques, la profondeur de champ au niveau de l'optique est grande ; le réglage optique/plan-image n'est donc pas toujours précis.

Par ailleurs, il existe des applications dans lesquelles ce réglage optique plan-image est plus délicat, ce qui est le cas, par exemple, en microscopie électronique. En effet, en microscopie électronique, l'opérateur peut réaliser le réglage optique/plan-image de façon visuelle ; il peut aussi le réaliser au moyen d'une technique dite de "wobber focusing aid". Cette technique est décrite notamment dans le document intitulé "the principles and practice of electron microscopy" de Ian M. WATT, dans Cambridge University Press, pages 29 à 31. Cette technique consiste à faire osciller un faisceau lumineux entre deux positions par rapport à la lentille du dispositif de prise d'images, ce qui produit une réponse double de l'objet étudié sur le plan-image, tant que le système n'est pas à l'optimum de sa focalisation.

Cependant, ces méthodes de wobbling sont difficiles à mettre en oeuvre car il n'est pas facile de dévier la source lumineuse.

Dans le domaine de l'astronomie, il est également utile d'avoir un réglage délicat, en particulier lorsque l'on utilise une caméra CCD en sortie d'une lunette astronomique, comme cela est décrit dans l'article "Une mission haute résolution au T 60" de J. DIJON et Al., dans la revue Pulsar n° 707, Mars-Avril 1995. Ce document décrit, en effet, une méthode permettant d'obtenir un réglage optique/plan-image relativement sensible. Cette méthode consiste à choisir une étoile unique, à placer devant l'entrée de la lunette astronomique un masque ayant deux trous et à vérifier le nombre de tâches lumineuse qui apparaissent sur la caméra CCD : si la caméra CCD est mal focalisée, par rapport à l'optique, alors deux tâches apparaissent sur la caméra ; par contre, si la focalisation est bonne, une seule tâche apparaît sur la caméra CCD. En déplaçant la projection de l'étoile sur les différentes régions de la caméra CCD, on peut ainsi régler l'alignement de l'ensemble optique/caméra CCD, c'est-à-dire l'alignement entre l'optique et le plan-image.

Cependant, cette méthode n'est applicable que pour un objet situé à l'infini, c'est-à-dire dans le cas particulier de l'astronomie.

D'autres méthodes optiques permettent d'effectuer le réglage de l'orthogonalité du plan-image avec l'axe optique. Une de ces méthodes consiste à utiliser une lunette autocollimatrice, placée en entrée de l'optique ; dans ce cas, il faut que le plan-image puisse fournir une réflexion pour ce type de réglage. En outre, des difficultés peuvent survenir lorsqu'il existe d'autres plans réfléchissant se trouvant sur la trajectoire entre l'optique et le plan-image, ce qui est le cas, lorsque l'on utilise une caméra CCD recouverte d'une fenêtre en verre.

Une telle méthode s'avère donc difficile à mettre en oeuvre. De plus, cette méthode fournit uniquement le réglage de planéité à effectuer ; elle ne donne en aucun cas le réglage de focalisation à effectuer pour obtenir un alignement.

### Exposé de l'invention

L'invention a justement pour but de remédier aux inconvénients des techniques décrites précédemment. A cette fin, elle propose un système qui permet de déterminer l'alignement ou le non-alignement d'un objet avec l'optique de couplage et le dispositif d'acquisition d'images et, dans le cas d'un non-alignement, de quantifier les réglages à effectuer sur le système pour obtenir l'alignement de ces éléments.

Pour cela, le système de l'invention utilise un dispositif d'acquisition d'images ainsi qu'une source lumineuse pour créer un ensemble de points lumineux et un masque opaque percé d'au moins deux trous pour laisser passer la lumière, les images de ces points lumineux sur le plan-image étant dédoublées dans le cas d'un non-alignement du système. Une analyse de ces images dédoublées permet alors de quantifier le réglage à effectuer sur le système pour obtenir l'alignement.

De façon plus précise, l'invention concerne un système de détermination de l'alignement d'un objet à mettre en image avec une optique de couplage et un dispositif d'acquisition d'images définissant un plan-image. Ce système se caractérise par le fait qu'il comporte :
- un dispositif d'acquisition d'images qui est muni de moyens de réglage de son propre positionnement ;
- une source lumineuse amovible dans le plan objet émettant au moins deux points lumineux non-focalisés ; la source produit :
   . un point lumineux dans le cas où la planéité du détecteur influence peu la qualité de l'alignement ; ou
   . au moins trois points lumineux dans le cas général ;
   par ailleurs, les trois points peuvent être produits :
   . par une source créant simultanément trois points lumineux ;
   . par le déplacement d'une source lumineuse ponctuelle, en trois endroits ;
- des moyens de couplage optique focalisant sur un plan-objet et assurant le couplage d'une image dans le plan-image avec une image créée dans le plan-objet ;
- un masque amovible opaque percé d'au moins deux trous et placé devant la source lumineuse de façon à transmettre au moins une partie de la lumière émise par ladite source lumineuse, la lumière transmise à travers chaque trou du masque formant au moins une image d'un point lumineux sur le dispositif d'acquisition, cette image étant dédoublée en cas de non-alignement ; et
- des moyens pour déterminer s'il y a alignement et, s'il n'y a pas alignement, pour quantifier ce non-alignement.

Les moyens pour déterminer s'il y a alignement sont par exemple :
. des moyens d'affichage de l'image (par exemple un écran) ; ou
. des moyens de calcul pour évaluer l'amplitude du dédoublement, c'est-à-dire de la distance séparant les taches issues d'un même point lumineux.

Selon un mode de réalisation de l'invention, le masque est placé dans le plan focale des moyens de couplage optique.

Avantageusement, les trous du masque sont de petite dimension, de façon à ce que la dimension de l'image de chaque point lumineux sur le plan-image soit du même ordre de grandeur que la résolution du système sur le plan-objet, soit deux à trois fois la valeur de la résolution.

Selon un mode de réalisation de l'invention, le système comporte un support d'objet transparent aux rayonnements lumineux et définissant le plan-objet.

Selon un autre mode de réalisation de l'invention, le plan objet est virtuel.

Le système de l'invention peut comporter, de plus, un ou plusieurs miroir(s) positionné(s) entre le plan-objet et le dispositif d'acquisition.

### Brève description des figures

- La figure 1 représente schématiquement le système de l'invention ;
- la figure 2 représente schématiquement le trajet optique des rayons lumineux émis depuis la source lumineuse jusqu'au plan-image ; et
- la figure 3 représente un exemple de source lumineuse.

### Description de modes de réalisation de l'invention

L'invention concerne un système pour déterminer l'alignement ou le non-alignement entre un objet à mettre en image, une optique de couplage et un dispositif d'acquisition d'images qui définit le plan-image du système.

Pendant toute la description qui va suivre, on parlera de plan-image et de plan-objet :
. le plan-image est le plan dans lequel se forme l'image d'un objet sur le dispositif de prise de vues (appelé aussi dispositif d'acquisition d'images) ;
. le plan-objet est le plan dans lequel se trouve l'objet au moment de la prise de vues. Toutefois, la détermination de l'alignement du système se fait en l'absence de l'objet. En effet, aucun objet n'est nécessaire pour déterminer s'il y a alignement ou non du système ; seul le plan dans lequel sera l'objet au moment de la prise de vues, appelé plan-objet, est utile dans le système de l'invention. Pendant la détermination de l'alignement, ce plan objet est soit défini virtuellement, soit défini matériellement par le support sur lequel sera posé l'objet lors de la prise d'images.

Durant la détermination de l'alignement, tout comme pendant la prise de vues, l'optique de couplage, appelée plus simplement "optique", focalise sur ce plan-objet.

L'objectif du système de l'invention est de produire un dédoublement, sur le plan-image, de l'image d'un point lumineux placé dans le plan-objet, dans le cas où l'alignement entre l'objet, l'optique de couplage et le plan-image n'est pas obtenu, ce qui correspond à un mauvais réglage du système.

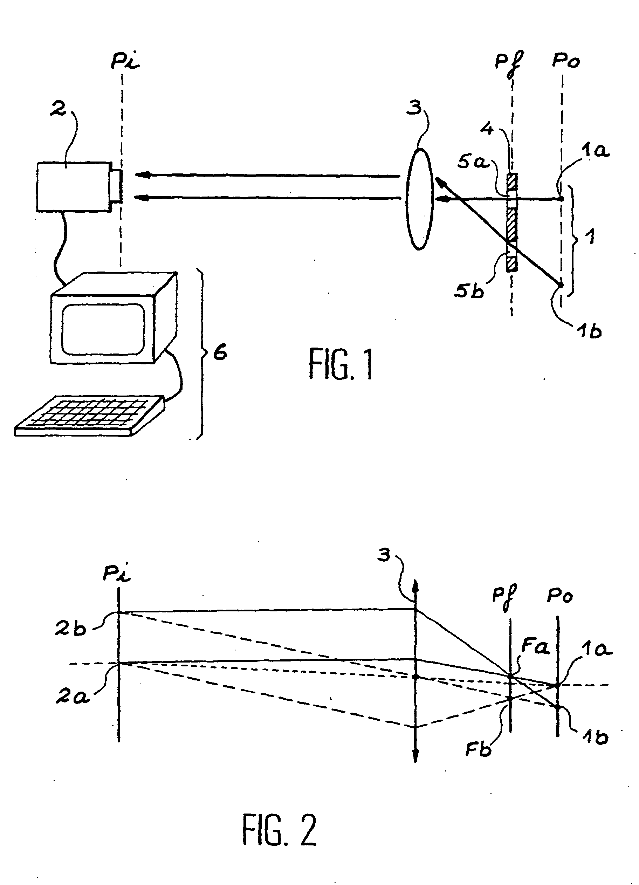

Pour cela, le système de l'invention, représenté sur la figure 1, comporte une source lumineuse 1 qui émet au moins un point lumineux 1a. Cette source lumineuse est placée dans le plan-objet (noté Po) du système optique et à la place où sera positionné l'objet pendant la phase prise de vues.

Dans le cas où le plan-objet est matérialisé par un support d'objet, celui-ci doit être transparent aux rayonnements émis par la source lumineuse. Par exemple, si les rayonnements émis sont des rayons X, le support d'objet qui définit le plan-objet peut être réalisé en Plexiglas®.

Le système de l'invention comporte de plus un dispositif d'acquisition d'images 2 qui est muni de moyens pour régler sa propre position. Ces moyens de réglage de sa position peuvent être tout simplement des moyens mécaniques, tels qu'un ensemble de trois mollettes ; ils ne sont pas représentés sur la figure par mesure de simplification de la figure.

Le dispositif d'acquisition peut être, par exemple, un "détecteur CCD".

Il est à noter que la focalisation sur le plan-objet est liée à la position du détecteur CCD par rapport à l'optique de couplage située entre le plan-objet et le plan-image.

Le système de l'invention comporte de plus une optique de couplage 3 placée entre le plan-objet Po et le plan-image Pi ; cette optique de couplage, appelée plus simplement "lentille", permet de coupler une image créée dans le plan-objet avec l'image obtenue dans le plan-image.

En outre, le système de l'invention comporte un masque 4 opaque aux rayonnements émis par la source lumineuse et placé, de façon avantageuse, au voisinage du plan focal Pf du système ou bien à proximité de l'optique 3. Ce masque est percé d'au moins deux trous 5a et 5b qui assurent une transmission au moins partielle de la lumière émise par la source lumineuse 1. En particulier, les trous du masque définissent chacun une direction différente du rayonnement incident, ce qui permet de provoquer le dédoublement de l'image des points lumineux sur le plan-image Pi, dans le cas d'un mauvais alignement.

Avantageusement, les point lumineux issus de la source sont petits, de façon à ce que leur diamètre soit du même ordre de grandeur que la résolution du système au niveau du plan-objet ; ils sont égaux, par exemple, à deux à trois fois la résolution du système. De plus, la lumière émise par les points lumineux ne doit pas être focalisée.

Le masque a aussi pour rôle de limiter la quantité de lumière sur le détecteur CCD, de façon à réduire la dimension des points lumineux définissant ainsi de façon plus précise la position géométrique de ces points lumineux.

Selon l'invention, ce masque est amovible ; en effet, il est utilisé uniquement lors de l'étape d'alignement.

Le système de l'invention comporte de plus des moyens de calcul 6 qui permettent de quantifier le non-alignement, c'est-à-dire de quantifier les réglages à effectuer sur le système pour obtenir l'alignement du système. Ces moyens de calcul peuvent être des moyens de calcul classiques tels qu'un PC.

Selon un mode de réalisation de l'invention, un ou plusieurs miroirs peuvent être inclus sur le trajet optique entre le plan-objet et le plan-d'image. Ainsi, il est possible, dans certaines applications, d'utiliser un trajet optique non-linéaire.

Sur la figure 2, on a représenté schématiquement le trajet optique des points lumineux 1a et 1b émis par la source lumineuse. Ces deux points lumineux 1a et 1b émis par la source lumineuse se projettent en 2a et 2b sur le plan-image Pi, c'est-à-dire sur le dispositif d'acquisition d'images, après un trajet optique à travers l'optique de couplage 3.

Sur cette figure 2, le dispositif d'acquisition d'images 2 est aligné avec la source lumineuse 1 et l'optique 3, puisque tous les rayons lumineux émis par chaque point du plan objet 1a et 1b convergent vers un point unique du plan image, respectivement, 2a et 2b. Par ailleurs, on constate, sur ce schéma, que les rayons lumineux incidents, parallèles à l'axe optique de la lentille (représentés en traits pleins) et qui passent tous par le point focal Fa. Il est à noter aussi que les rayons incidents obliques et parallèles entre eux (représentés en pointillés sur la figure 2) passent par un autre point focal unique Fb. Ainsi, à chaque point focal Fa et Fb du plan-focal Pf correspond une direction de rayons incidents.

On notera que le masque 4 est placé avantageusement dans le plan-focal Pf ou dans son voisinage et ne laisse alors passer la lumière que par les trous 5a et 5b qui correspondent aux points focaux Fa et Fb.

Considérons maintenant les rayons lumineux issus du point lumineux 1a qui traverse les trous 5a et 5b du masque au niveau des points focaux Fa et Fb. Si le détecteur CCD 2 est placé correctement par rapport à l'optique 3 et au plan-objet Po, c'est-à-dire si les trois éléments sont alignés, alors l'image du point lumineux la est le point 2a.

Par contre, si le détecteur CCD est défocalisé, alors l'image du point lumineux la sera un ensemble de deux points sur le détecteur CCD. Dans ce cas, la distance entre les deux points images du point lumineux la sera proportionnelle à la distance de focalisation du détecteur CCD. Le masque 4 permet alors de trouver le réglage de planéité et de focalisation du système qui, pour l'ensemble des points lumineux émis par la source de lumière, permet de rapprocher le plus possible les images des points lumineux doubles sur le plan-image Pi défini par le détecteur CCD.

En effet, à partir de la connaissance de l'écartement de deux images d'un point lumineux, pour deux positions différentes du détecteur CCD, il est possible de trouver la position optimum de focalisation, c'est-à-dire la position optimum du détecteur CCD pour que les deux images du point lumineux se confondent. Ce réglage de position à effectuer sur le système est déterminé soit par les moyens de calcul soit en affichant l'image créée sur le détecteur et en déterminant visuellement l'amplitude du dédoublement.

Selon un mode de réalisation de l'invention, la source lumineuse 1 est une mire constituée d'une matrice de points lumineux, tels que des diodes électroluminescentes (ou LED) placées sur un support.

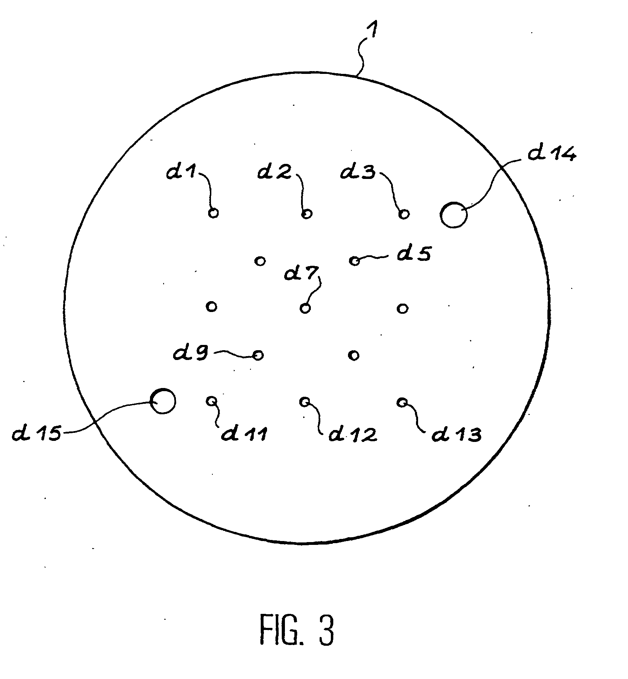

Sur la figure 3, on a représenté un exemple de mire constituée d'une matrice de n diodes placée sur un support en forme de disque. Sur cet exemple, la plupart des diodes (ou LED) ont des diamètres de 0,3 m, ce qui permet d'obtenir une image des points lumineux d'un diamètre d'environ 3 pixels sur le détecteur CCD ; deux diodes ont un diamètre plus important et permettent de définir l'orientation de la mire. En particulier, la mire représentée sur cette figure 3, comporte treize LED de calibrage d1 à d13 d'un diamètre de 0,3 mm et de deux LED de repérage d14 et d15 d'un diamètre d'environ 2 mm.

Dans une application de calcul automatique, connaissant les positions relatives de l'ensemble des LED, des deux LED de repérage permettent de déterminer rapidement l'orientation de l'ensemble des points de la mire.

## Revendications

1. Système de détermination de l'alignement d'un objet à mettre en image avec des moyens de couplage optique et avec un dispositif d'acquisition d'images définissant un plan-image (Pi), **caractérisé en ce qu'**il comporte :
- un dispositif d'acquisition d'images (2) muni de moyens de réglage de son propre positionnement ;
- des moyens de couplage optique (3) focalisant sur un plan-objet (Po) et assurant le couplage d'une image dans le plan-image avec une image créée dans le plan-objet ;
- une source lumineuse (1) amovible dans le plan objet, émettant au moins deux points lumineux non-focalisés (1a, 1b) ;
- un masque opaque amovible (4) percé d'au moins deux trous (5a, 5b) et placé devant la source lumineuse (1) de façon à transmettre au moins une partie de la lumière émise par ladite source lumineuse, la lumière transmise à travers chaque trou du masque formant au moins une image (2a, 2b) d'un point lumineux sur le dispositif d'acquisition, cette image étant dédoublée en cas de non-alignement ; et
- des moyens pour déterminer s'il y a alignement et, s'il n'y a pas alignement, pour quantifier ce non-alignement.

2. Système selon la revendication 1, **caractérisé en ce que** les points lumineux sont de petite dimension, de façon à ce que la dimension de l'image de chaque point lumineux sur le plan-image est du même ordre de grandeur que la résolution du système sur le plan-objet.

3. Système selon la revendication 1 ou 2, **caractérisé en ce qu'**il comporte un support d'objet transparent aux rayonnements lumineux et définissant le plan objet.

4. Système selon la revendication 1 ou 2, **caractérisé en ce que** le plan objet est virtuel.

5. Système selon l'une quelconque des revendications 1 à 4, **caractérisé en ce qu'**il comporte au moins un miroir positionné entre le plan-objet et le dispositif d'acquisition.

6. Système selon l'une quelconque des revendications 1 à 5, **caractérisé en ce que** le masque opaque est placé dans le plan focale des moyens de couplage optique.

## Patentansprüche

1. System für die Ermittlung der Ausrichtung eines abzubildenden Objekts mit optischen Kopplungseinrichtungen und mit einer eine Bildebene (Pi) definierenden Bilderfassungsvorrichtung,
**dadurch gekennzeichnet, dass** es umfasst:
- eine Bilderfassungsvorrichtung (2), ausgerüstet mit Einstelleinrichtungen ihrer eigenen Positionierung;
- optische Kopplungseinrichtungen (3), die auf eine Objektebene (Po) fokussieren und die Kopplung eines Bildes in der Bildebene mit einem in der Objektebene erzeugten Bild ermöglichen;
- eine Lichtquelle (1), beweglich in der Objektebene, die mindestens zwei nicht-fokussierte Lichtpunkte (1a, 1b) abstrahlt;
- eine bewegliche opake Maske (4), die mindestens zwei Löcher (5a, 5b) aufweist und so vor der Lichtquelle (1) angeordnet ist, dass sie wenigstens einen Teil des durch diese Lichtquelle abgestrahlten Lichts durchlässt, wobei das von jedem Loch der Maske durchgelassene Licht mindestens eine Abbildung (2a, 2b) eines Lichtpunkts auf der Erfassungsvorrichtung erzeugt und diese Abbildung im Falle von Nicht-Ausrichtung zweigeteilt bzw. gespalten ist; und
- Einrichtungen, um zu ermitteln, ob Ausrichtung besteht und, wenn keine Ausrichtung besteht, um diese Nicht-Ausrichtung zu quantifizieren.

2. System nach Anspruch 1, **dadurch gekennzeichnet, dass** die Lichtpunkte von kleiner Abmessung sind, so dass die Größe der Abbildung jedes Lichtpunkts in der Bildebene dieselbe Größenordnung aufweist wie die Auflösung des Systems in der Objektebene.

3. System nach Anspruch 1 oder 2, **dadurch gekennzeichnet, dass** es einen für die Lichtstrahlen transparenten und die Objektebene definierenden Objektträger umfasst.

4. System nach Anspruch 1 oder 2, **dadurch gekennzeichnet, dass** die Objektebene virtuell ist.

5. System nach einem der Ansprüche 1 bis 4, **dadurch gekennzeichnet, dass** es wenigstens einen zwischen der Objektebene und der Erfassungsvorrichtung positionierten Spiegel umfasst.

6. System nach einem der Ansprüche 1 bis 5, **dadurch gekennzeichnet, dass** die opake Maske sich in der Fokalebene der optischen Kopplungseinrichtungen befindet.

## Claims

1. System for determining the alignment of an object, whose image is to be recorded, with optical coupling means and an image capture apparatus that defines an image plane (Pi), **characterized in that** it comprises:
- an image capture apparatus (2) equipped with means for adjusting its own position;
- optical coupling means (3) that focus on an object plane (Po) and that ensure the coupling of an image in the image plane with an image created in the object plane;
- a light source (1) that is movable in the object plane and that emits at least two non-focussed luminous dots (1a, 1b);
- a removable opaque mask (4) that is perforated with at least two holes (5a, 5b) and that is positioned in front of light source (1) such that it transmits at least part of the light emitted by said light source, the light transmitted through each hole in the mask forming at least one image (2a, 2b) of a luminous dot on the capture apparatus, said image being split into two if the elements are non-aligned, and
- means for determining whether alignment exists and, in the case of non-alignment, for quantifying said non-alignment.

2. System according to claim 1, **characterized in that** the luminous dots are small, such that the size of the image of each luminous dot on the image plane is of the same order of magnitude as the resolution of the system on the object plane.

3. System according to claim 1 or 2, **characterized in that** it comprises an object support transparent to beams of light and defining the object plane.

4. System according to claim 1 or 2, **characterized in that** the object plane is virtual.

5. System according to any one of the claims 1 to 4, **characterized in that** it comprises at least one mirror positioned between the object plane and the capture apparatus.

6. System according to any one of the claims 1 to 5, **characterized in that** the opaque mask is positioned in the focal plane of the optical coupling means.
